(19) Europäisches Patentamt
European Patent Office
Office européen des brevets

(11) Veröffentlichungsnummer: **0 251 114**
**B1**

(12) # EUROPÄISCHE PATENTSCHRIFT

(45) Veröffentlichungstag der Patentschrift: **02.05.90**

(51) Int. Cl.⁴: **C09B 29/033**, D06P 1/18

(21) Anmeldenummer: **87108943.9**

(22) Anmeldetag: **23.06.87**

(54) **Thienothiophenfarbstoffe.**

(30) Priorität: **02.07.86 DE 3622136**

(43) Veröffentlichungstag der Anmeldung:
**07.01.88 Patentblatt 88/1**

(45) Bekanntmachung des Hinweises auf die Patenterteilung:
**02.05.90 Patentblatt 90/18**

(84) Benannte Vertragsstaaten:
**CH DE FR GB IT LI**

(56) Entgegenhaltungen:
**CH-A-603 750**
**US-A-3 189 618**

(73) Patentinhaber: **BASF Aktiengesellschaft, Carl-Bosch-Strasse 38, D-6700 Ludwigshafen(DE)**

(72) Erfinder: **Eilingsfeld, Heinz, Dr., Pierstrasse 9 a, D-6710 Frankenthal(DE)**
Erfinder: **Etzbach, Karl-Heinz, Dr., Carl-Bosch-Ring 55, D-6710 Frankenthal(DE)**
Erfinder: **Hansen, Guenter, Dr., Alwin-Mittasch-Platz 8, D-6700 Ludwigshafen(DE)**
Erfinder: **Reichelt, Helmut, Dr., Weinbachstrasse 20, D-6701 Niederkirchen(DE)**

EP 0 251 114 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die vorliegende Erfindung betrifft Thienothiophenfarbstoffe der Formel I

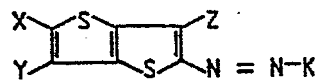

(I),

in der

Z $C_1$-$C_8$-Alkoxycarbonyl, dessen Alkylkette gegebenenfalls durch ein oder mehrere Sauerstoffatome unterbrochen ist, gegebenenfalls durch $C_1$–$C_4$ Alkyl, $C_1$–$C_4$-Alkoxy oder Halogen substituiertes Phenoxycarbonyl, Carbomoyl, $C_1$–$C_8$-Mono- oder Dialkylcarbamoyl, Pyrrolidinocarbonyl, Piperidinocarbonyl, Morpholinocarbonyl, Piperazinocarbonyl, (N–$C_1$–$C_4$-Alkyl)piperazinocarbonyl, Carboxyl, Cyano, $C_1$–$C_{10}$-Alkanoyl, gegebenenfalls durch $C_1$–$C_4$-Alkyl, $C_1$–$C_4$-Alkoxy oder Halogen substituiertes Phenylcarbonyl, $C_1$–$C_4$-Alkylsulfonyl, gegebenenfalls durch $C_1$–$C_4$-Alkyl, $C_1$–$C_4$-Alkoxy oder Halogen substituiertes Phenylsulfonyl oder Nitro

X Wasserstoff, Fluor, Chlor, Brom, den Rest Z oder eine Gruppe der Formel

$-CH=CT^1T^2$, $-CH=N-OH$, $-CH=N-NH-C_6H_5$ oder

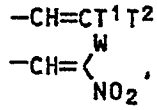,

wobei

$T^1$ und $T^2$ gleich oder verschieden sind und unabhängig voneinander jeweils für Cyano, $C_1$–$C_8$-Alkoxycarbonyl, dessen Alkylkette gegebenenfalls durch ein oder mehrere Sauerstoffatome unterbrochen ist, $C_3$–$C_6$-Alkenyloxycarbonyl, Carbamoyl oder $C_1$–$C_4$-Mono- oder Dialkylaminocarbonyl und

W für Wasserstoff, Methyl oder Ethyl stehen,

Y Wasserstoff, Chlor oder Brom und

K den Rest einer Kupplungskomponente bedeuten.

Alle in den Formeln der erfindungsgemäßen Thienothiophenfarbstoffe auftretenden Alkylgruppen können sowohl geradkettig als auch verzweigt sein.

Für den Fall, daß in den Formeln der erfindungsgemäßen Thienothiophenfarbstoffe substituierte Phenylgruppen auftreten, kommen als Substituenten dafür $C_1$–$C_4$-Alkyl, $C_1$–$C_4$-Alkoxy oder Halogen, insbesondere Fluor, Chlor oder Brom in Betracht. Z und X in Formel I bedeuten beispielsweise:

CHO, $CH_3CO$, $C_2H_5CO$, $C_3H_7CO$, $C_4H_9CO$, $C_5H_{11}CO$, $C_7H_{15}CO$, 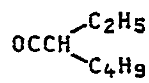, $C_6H_5CO$, $CH_3C_6H_4CO$, $ClC_6H_4CO$, $(CH_3)_2C_6H_3CO$, $H_3COC_6H_4CO$, $Cl_2C_6H_3CO$, $CH_3SO_2$, $C_2H_5SO_2$,

$C_4H_9SO_2$, $C_6H_5SO_2$, $CH_3C_6H_4SO_2$, $ClC_6H_4SO_2$, $COOCH_3$, $COOC_2H_5$, $COOC_3H_7$, $COOC_4H_9$, $COOC_6H_{13}$, $COOC_8H_{17}$, 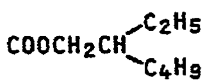, $COOC_2H_4OCH_3$, $COOC_2H_4OC_2H_5$, $COOC_2H_4OC_4H_9$, $COOC_6H_5$, $COOC_6H_4CH_3$, $CONH_2$, $CONHCH_3$, $CONHC_2H_5$, $CONHC_4H_9$, $CONHC_6H_{13}$, $CONHC_8H_{17}$, $CON(CH_3)_2$, $CON(C_2H_5)_2$, $CON(C_4H_9)_2$ oder 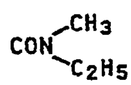.

$T^1$ und $T^2$ in Formel I stehen beispielsweise für Methoxycarbonyl, Ethoxycarbonyl, Propoxycarbonyl, Isopropoxycarbonyl, Butoxycarbonyl, Isobutoxycarbonyl, sec-Butoxycarbonyl, Pentyloxycarbonyl, Isopentyloxycarbonyl, sec-Pentyloxycarbonyl, tert-Pentyloxycarbonyl, Hexyloxycarbonyl, Heptyloxycarbonyl, Octyloxycarbonyl, 2-Ethylhexyloxycarbonyl, 2-Methoxyethoxycarbonyl, 2-Ethoxyethoxycarbonyl, 2-Butoxyethoxycarbonyl, 3-Methoxypropoxycarbonyl, 3,6-Dioxaheptyloxycarbonyl, Allyloxycarbonyl, 2-Methylallyloxycarbonyl, 2-Ethylallyloxycarbonyl, Methylaminocarbonyl, Ethylaminocarbonyl, Propylaminocarbonyl, Dimethylaminocarbonyl, Diethylaminocarbonyl oder Methylethylaminocarbonyl.

Die Reste K leiten sich von Kupplungskomponenten der Formel HK ab. Diese stammen vorzugsweise aus der Anilin-, α-Naphthylamin-, Pyrazol-, Aminopyrazol-, Indol-, Thiazol-, Thiophen-, Phenol-, Naphthol-, Tetrahydrochinolin, Pyridon- oder Pyridenreihe, wobei solche der Anilin-, Pyrazol-, Pyridin-, Thiophen- oder Thiazolreihe bevorzugt sind.

Die Kupplungskomponenten HK entsprechen dabei den Formeln

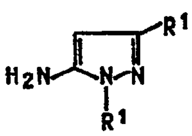 , 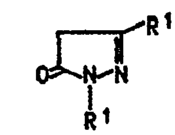 , 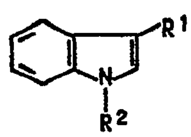 , 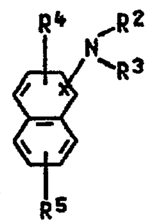 , 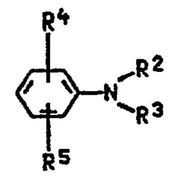 ,

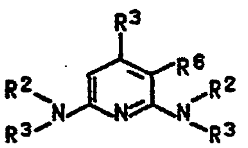 , 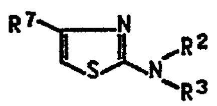 , 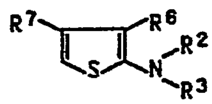 oder 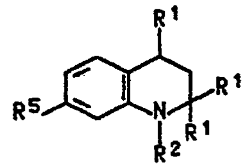

wobei

$R^1$ Wasserstoff, $C_1$–$C_4$-Alkyl, Benzyl, 2-Phenylethyl oder gegebenenfalls durch $C_1$–$C_4$-Alkyl, $C_1$–$C_4$-Alkoxy oder Halogen substituiertes Phenyl,

$R^2$ Wasserstoff oder $R^3$,

$R^3$ $C_1$–$C_6$-Alkyl, $C_1$–$C_6$-Alkyl, das durch Chlor, Brom, Hydroxy, $C_1$–$C_8$-Alkoxy, Propargyloxy, Phenoxy, Phenyl, Cyano, Carboxyl, $C_1$–$C_8$-Alkanoyloxy, $C_1$–$C_8$-Alkoxy-$C_1$–$C_4$-alkoxy, Benzoyloxy, o-, m-, p-Methylbenzoyloxy, o-, m-, p-Chlorbenzoyloxy, $C_1$–$C_8$-Alkoxyalkanoyloxy, Phenoxyalkanoyloxy, $C_1$–$C_8$-Alkoxycarbonyloxy, $C_1$–$C_8$-Alkoxyalkoxycarbonyloxy, Benzyloxycarbonyloxy, Phenethyloxycarbonyloxy, Phenoxyethoxycarbonyloxy, $C_1$–$C_8$-Alkylaminocarbonyloxy, Cyclohexylaminocarbonyloxy, Phenylaminocarbonyloxy, $C_1$–$C_8$-Alkoxycarbonyl, $C_1$–$C_8$-Alkoxyalkoxycarbonyl, Phenoxycarbonyl, Benzyloxycarbonyl, Phenoxy-$C_1$–$C_4$-alkoxy oder Phenethyloxycarbonyl ein- oder mehrfach substituiert sein kann, $C_5$–$C_7$-Cycloalkyl, $C_3$–$C_4$-Alkenyl oder gegebenenfalls durch $C_1$–$C_4$-Alkyl, $C_1$–$C_4$-Alkoxy oder Halogen substituiertes Phenyl,

$R^4$ und $R^5$ unabhängig voneinander Wasserstoff, $C_1$–$C_4$-Alkyl, $C_1$–$C_4$-Alkoxy, Phenoxy, Benzyloxy, Halogen, $C_1$–$C_4$-Alkylsulfonylamino, $C_1$–$C_4$-Dialkylaminosulfonylamino, gegebenenfalls durch Chlor, Brom, Cyano, Methoxy, Ethoxy oder Phenoxy substituiertes $C_1$–$C_6$-Alkanoylamino,

$R^6$ Cyano, Carbamoyl, $C_1$–$C_4$-Mono- oder Dialkylcarbamoyl, Nitro oder $C_1$–$C_8$-Alkoxycarbonyl, dessen Alkylkette gegebenenfalls durch ein oder mehrere Sauerstoffatome unterbrochen ist, und

$R^7$ Halogen, Nitro, gegebenenfalls substituiertes Phenyl, $C_1$–$C_{10}$-Alkyl oder $C_1$–$C_{10}$-Alkoxy, deren Alkylkette gegebenenfalls jeweils durch ein oder mehrere Sauerstoffatome unterbrochen und/oder durch Phenyl substituiert ist, Phenoxy, $C_1$–$C_4$-Mono- oder Dialkylamino, $C_1$–$C_4$-Alkylthio, Phenylthio, $C_1$–$C_4$-Alkoxycarbonyl, $C_1$–$C_5$-Alkanoylamino, $C_1$–$C_4$-Alkoxycarbonylmethyl oder Cyanomethyl bedeuten.

Einzelne Reste $R^1$ sind neben den bereits genannten beispielsweise Methyl, Ethyl, Propyl, Butyl, Phenyl, o-, m-, p-Tolyl oder o-, m-, p-Chlorphenyl.

Einzelne Reste $R^3$ sind z.B. Methyl, Ethyl, Propyl, Butyl, Pentyl, Hexyl, Benzyl, 2-Phenylethyl, Allyl, Methallyl, 2-Chlorethyl, 2-Bromethyl, 2-Cyanoethyl, 2-Hydroxyethyl, 2-Phenyl-2-hydroxyethyl, 2,3-Dihydroxypropyl, 2-Hydroxypropyl, 2-Hydroxybutyl, 2-Hydroxy-3-phenoxypropyl, 2-Hydroxy-3-methoxypropyl, 2-Hydroxy-3-butoxypropyl, 3-Hydroxypropyl, 2-Methoxyethyl, 2-Ethoxyethyl, 2-Propoxyethyl, 2-Butoxyethyl, 2-Phenoxyethyl, 2-Phenoxypropyl, 2-Acetoxyethyl, 2-Propionyloxyethyl, 2-Butyryloxyethyl, 2-Isobutyryloxyethyl, 2-Methoxymethylcarbonyloxyethyl, 2-Ethoxymethylcarbonyloxyethyl, 2-Phenoxymethylcarbonyloxyethyl, 2-Methoxycarbonyloxyethyl, 2-Ethoxycarbonyloxyethyl, 2-Propoxycarbonyloxyethyl, 2-Butoxycarbonyloxyethyl, 2-Phenyloxycarbonyloxyethyl, 2-Benzyloxycarbonyloxyethyl, 2-Methoxyethoxycarbonyloxyethyl, 2-Ethoxyethoxycarbonyloxyethyl, 2-Propoxyethoxycarbonyloxyethyl, 2-Butoxyethoxycarbonyloxyethyl, 2-Methylaminocarbonyloxyethyl, 2-Ethylaminocarbonyloxyethyl, 2-Propylaminocarbonyloxyethyl, 2-Butylaminocarbonyloxyethyl, 2-Methoxycarbonylethyl, 2-Ethoxycarbonylethyl, 2-Propoxycarbonylethyl, 2-Butoxycarbonylethyl, 2-Phenoxycarbonylethyl, 2-Benzyloxycarbonylethyl, 2-β-Phenylethoxycarbonylethyl, 2-Methoxyethoxycarbonylethyl, 2-Ethoxyethoxy-carbonylethyl, 2-Propoxyethoxycarbonylethyl, 2-Butoxyethoxycarbonylethyl, 2-Phenoxyethoxycarbonylethyl, 2-Benzoylethyl, Cyclopentyl, Cyclohexyl, Cycloheptyl, Allyl, Methallyl, Phenyl, 2-Methylphenyl oder 4-Chlorphenyl.

Als Reste $R^4$ und $R^5$ kommen neben den bereits genannten, beispielsweise Wasserstoff, Methyl, Ethyl, Propyl, Brom, Chlor, Methoxy, Ethoxy, Methylsulfonylamino, Dimethylaminosulfonylamino, Methoxycarbonylamino oder Ethoxycarbonylamino in Betracht.

Reste $R^6$ sind neben den bereits genannten z.B. Methylaminocarbonyl, Dimethylaminocarbonyl, Ethylaminocarbonyl, Diethylaminocarbonyl, Methoxycarbonyl, Ethoxycarbonyl, n- oder i-Propoxycarbonyl, n-, i- oder sec-Butoxycarbonyl, Methoxyethoxycarbonyl, Ethoxyethoxycarbonyl, n- oder i-Propoxyethoxycarbonyl oder n-, i- oder sec-Butoxyethoxycarbonyl.

Reste $R^7$ sind neben den bereits genannten beispielsweise Benzyl, Benzyloxy, Chlor, Brom, $C_1$–$C_4$-Alkoxy-ethoxy, Acetylamino, Propionylamino, Butyrylamino oder Valerylamino.

Von besonderer Bedeutung sind Thienothiophenfarbstoffe der Formel I mit Kupplungskomponenten aus der Anilin-, α-Naphthylamino, Thiazol-, Thiophen- oder Pyridinreihe.

Besonders bevorzugt sind solche Thienothiophenfarbstoffe der Formel I, in der X Formyl, Acetyl, $C_1$-$C_4$-Alkoxycarbonyl, Nitro oder Cyano, Y Wasserstoff, Z Cyano, $C_1$-$C_2$-Alkoxycarbonyl, $C_1$-$C_2$-Monoalkylcarbamoyl, $C_1$-$C_2$-Alkylsulfonyl oder Phenylsulfonyl und K den Rest einer Kupplungskomponente der Anilin-, Thiazol- oder Pyridinreihe bedeuten.

Insbesondere sind Thienothiophenfarbstoffe der Formel I zu nennen, in der Z Cyano oder Methoxy- oder Ethoxycarbonyl bedeutet.

Zur Herstellung der Thienothiophenfarbstoffe der Formel I kann man Thienothiophene der Formel II

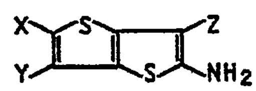 (II),

in der X, Y und Z jeweils die obengenannte Bedeutung besitzen, diazotieren und mit einer Kupplungskomponente der Formel III

HK (III),

in der K die obengenannte Bedeutung besitzt, nach an sich bekannten Methoden umsetzen. Nähere Einzelheiten der Herstellung können den Beispielen entnommen werden.

Die Thienothiophene der Formel II kann man z.B. durch Umsetzung von Thiophenen der Formel IV

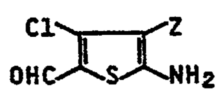 (IV),

in der Z die obengenannte Bedeutung besitzt mit Mercaptanen der Formel V

$A-CH_2-SH$ (V)

erhalten, in der A einen elektronenziehenden Rest bedeutet.

Thienothiophene der Fomel II, in denen X für Wasserstoff, Fluor, Chlor oder Brom steht, können durch weitere Umsetzung aus den Verbindungen der Formel VI

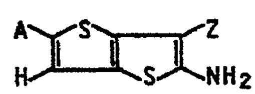 (VI),

in der A und Z jeweils die obengenannte Bedeutung besitzen, erhalten werden. Gleichermaßen können diejenige Thienothiophene der Formel II, in der Y nicht Wasserstoff bedeutet, durch Einführung von Chlor oder Brom in die Verbindungen der Formel VI hergestellt werden.

Darüberhinaus können zur Herstellung der Thienothiophenfarbstoffe der Formel I auch Thiophenfarbstoffe der Formel VII

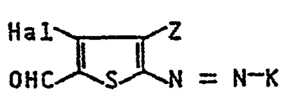 (VII),

in der K und Z jeweils die obengenannte Bedeutung besitzen und Hal für Halogen steht, mit den Mercaptanen (V) umgesetzt werden. Nähere Einzelheiten können wiederum den Beispielen entnommen werden.

In denjenigen Verbindungen der Formel I und II, in denen X eine Formylgruppe bedeutet, kann diese auf allgemein bekannte Weise weiter umgesetzt werden. in Betracht kommt hier z.B. die Kondensation mit Hydroxylamin und gegebenenfalls eine Acylierung am Sauerstoff unter Nitrilbildung oder die Umsetzung mit Phenylhydrazin oder mit methylenaktiven Verbindungen nach Knoevenagel oder Perkin.

Aus der US-A 3 189 618 sind Diaminothienothiophene bekannt.

Die erfindungsgemäßen Thienothiophenfarbstoffe eignen sich vorteilhaft zum Färben von synthetischen Fasern, vorzugsweise von Polyestern, Polyamiden, Mischgeweben aus Polyestern und Cellulosefasern oder Celluloseestern. Man erhält Färbungen mit guten Echtheiten, insbesondere auf Polyestern.

Bei geeigneter Konstitution sind die Farbstoffe auch alkalisch und/oder reduktiv nach an sich bekannten Verfahren ätzbar.

Die folgenden Beispiele sollen die Erfindung näher erläutern. Die Angaben über Teile und Prozente beziehen sich, sofern nicht anders vermerkt, auf das Gewicht.

Beispiel 1

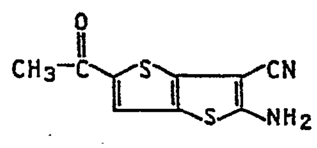

Man legte eine Mischung aus 18,7 Teilen 2-Amino-4-chlor-3-cyano-5-formylthiophen, 13,8 Teilen Kaliumcarbonat und 80 Teilen N,N-Dimethylformamid vor und trug dann 9 Teile Actonylmercaptan ein. Nach Abklingen der exothermen Reaktion erwärmte man das Gemisch noch 1 Stunde auf 60°C und gab es dann auf Wasser. Der Niederschlag wurde abgesaugt, mit Wasser gewaschen und getrocknet. Man erhielt 17,9 Teile (81 % d. Th.) 5-Acetyl-2-amino-3-cyano-thieno[3,2-b]thiophen.

Schmp.: 285°C (Zers. aus Methylglykol), IR (KBr): 3419, 3326 ($NH_2$), 2205 (CN), 1654, 1629 $cm^{-1}$.

$C_9H_6N_2OS_2$ (222)

Ber.: C 48,6 H 2,7 N 12,6 S 28,9

Gef.: C 48,3 H 2,8 N 12,4 S 28,6

Beispiel 2

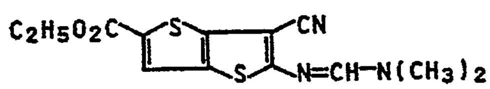

Zu einer Mischung aus 241,5 Teilen N,N-Dimethyl-N'-(4-chlor-3-cyano-5-formylthien-2-yl)formamidin, 138 Teilen Kaliumcarbonat und 1400 Teilen N,N-Dimethylformamid gab man 120 Teile Thioglykolsäureethylester. Nach Abklingen der schwach exothermen Reaktion rührte man das Reaktionsgemisch noch 2 Stunden bei 50°C und setzte dann 1000 Teile Eis, 1000 Teile Wasser und 150 Teile konz. Salzsäure zu. Der Niederschlag wurde abgesaugt, mit Wasser gewaschen und getrocknet. Man erhielt 284 Teile (93 % d. Th.) N,N-Dimethyl-N'-(3-cyano-5-ethoxycarbonylthieno[3,2-b]thien-2-yl)formamidin.

Schmp.: 168°C (aus Eisessig), IR (KBr): 2206 (CN), 1701, 1689 (C = 0) 1634, 1623 $cm^{-1}$.

$C_{13}H_{13}N_3O_2S_2$ (307)

Ber.: C 50,8 H 4,3 N 13,7 O 10,4 S 20,9

Gef.: C 50,9 H 4,2 N 13,7 O 10,4 S 20,3

Beispiel 3

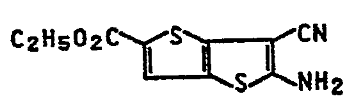

Eine Mischung aus 319 Teilen N,N-Dimethyl-N'-(3-cyano-5-ethoxycarbonylthieno[3,2-b]thien-2-yl)formamidin, 2000 Teilen Ethanol und 210 Teilen konz. Salzsäure wurde 1 Stunde zum Sieden erhitzt.

Nach dem Abkühlen saugte man den Niederschlag ab, wusch ihn mit Ethanol und dann mit Wasser und trocknete ihn. Man erhielt 210 Teile (80 % d. Th.) 2-Amino-3-cyanothieno[3,2-b]thiophen-5-carbonsäureethylester.
Schmp.: 250°C (aus Eisessig), IR (KBr): 3418, 3322 ($NH_2$), 2205 (CN), 1712, 1694 $cm^{-1}$.
$C_{10}H_8N_2O_2S_2$ (252)
Ber.: C 47,6 H 3,2 N 11,1 O 12,7 S 25,4
Gef.: C 47,6 H 3,3 N 11,0 O 13,1 S 25,2

Beispiel 4

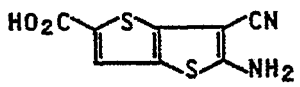

Zu einer Lösung aus 11,2 Teilen Kaliumhydroxid, 10 Teilen Wasser und 150 Teilen Ethanol gab man 25,2 Teile 2-Amino-3-cyanothieno[3,2-b]thiophen-5-carbonsäureethylester. Die Mischung wurde 2 Stunden zum Sieden erhitzt, dann saugte man den Niederschlag ab, wusch ihn mit Ethanol und gab ihn in verdünnte Salzsäure. Man rührte die salzsaure Suspension 3 Stunden bei Raumtemperatur, saugte anschließend das Produkt ab und wusch es mit Wasser. Nach dem Trocknen erhielt man 15 Teile (67 % d. Th.) 2-Amino-3-cyanothieno[3,2-b]thiophen-5-carbonsäure.
Schmp.: 280°C (Zers.), IR (KBr): 3421, 3329 ($NH_2$), 3200-2350 (OH), 2206 (CN), 1661, 1627 $cm^{-1}$.
$C_8H_4N_2O_2S_2$ (224)
Ber.: C 42,9 H 1,8 N 12,5 O 14,3 S 28,6
Gef.: C 42,5 H 1,9 N 12,2 O 15,3 S 27,9

Die in der folgenden Tabelle 1 aufgeführten 2-Aminothieno[3,2-b]thiophene der Formel

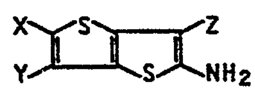

können in analoger Weise erhalten werden.

Tabelle 1

| Bsp. | X | Y | Z |
|---|---|---|---|
| 5 | CN | H | CN |
| 6 | $NO_2$ | H | CN |
| 7 | $CO_2CH_3$ | H | CN |
| 8 | CHO | H | CN |
| 9 | Cl | H | CN |

Tabelle 1: Fortsetzung

| Bsp. | X | Y | Z |
|---|---|---|---|
| 10 | Br | H | CN |
| 11 | H | H | CN |
| 12 | CN | Cl | CN |
| 13 | $COCH_3$ | H | $CO_2C_2H_5$ |
| 14 | $CO_2C_2H_5$ | H | $CO_2C_2H_5$ |
| 15 | CN | H | $CO_2C_2H_5$ |
| 16 | $NO_2$ | H | $CO_2C_2H_5$ |
| 17 | $COCH_3$ | H | $CO_2CH_3$ |
| 18 | $CO_2CH_3$ | H | $CO_2CH_3$ |
| 19 | CN | H | $CO_2CH_3$ |
| 20 | $C_6H_5CO$ | H | CN |

Beispiel 21

5,55 Teile 5-Acetyl-2-amino-3-cyanothieno[3,2-b]thiophen wurden in 75 Vol.-Teilen Eisessig/Propionsäure 3:1 und 50 Vol.-Teilen 85 %iger Schwefelsäure bei 0-5°C angerührt. Unter Rühren tropfte man 8,25 Teile Nitrosylschwefelsäure (11,5 % $N_2O_3$) zu und rührte während 3 Stunden bei 0-5°C.

Diese Diazoniumsalzlösung fügte man bei ca. 0°C unter Rühren zu einem Gemisch aus 5,65 Teilen 3-(N,N-Diethylamino)-1-acetanilid und 0,5 Teilen Amidosulfonsäure in 100 Vol.-Teilen N,N-Dimethylformamid. Die Temperatur wurde durch Außenkühlung und Einstreuen von ca. 400 Teilen Eis gehalten. Die entstandene Farbstoffsuspension wurde 3 bis 4 Stunden nachgerührt. Der Farbstoff der Formel

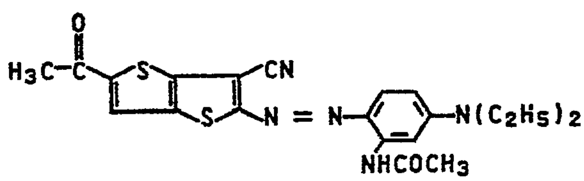

wurde abgesaugt, mit Wasser neutral gewaschen und getrocknet (9.1 Teile). Er färbt Polyesterfasermaterial in blauen Tönen mit sehr guten Echtheiten.

Die in den folgenden Tabellen 2 und 3 aufgeführten Farbstoffe können in analoger Weise hergestellt werden. Die Farbstoffe der Tabelle 2 entsprechen der Formel

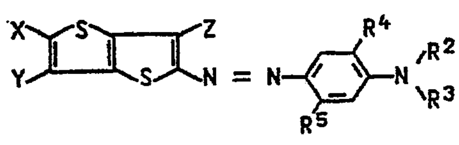

Tabelle 2

| Bsp. | X | Y | Z | $R^5$ | $R^4$ | $R^3$ | $R^2$ | Nuance auf PES |
|---|---|---|---|---|---|---|---|---|
| 22 | $COCH_3$ | H | CN | $CH_3$ | H | $C_2H_5$ | $C_2H_5$ | rotst. blau |
| 23 | $COCH_3$ | H | CN | $CH_3$ | H | $C_4H_9$ | $C_4H_9$ | rotst. blau |
| 24 | $COCH_3$ | H | CN | $NHCOCH_2Cl$ | H | $C_2H_5$ | $C_2H_5$ | blau |
| 25 | $COCH_3$ | H | CN | $NHCOCH_2OCH_3$ | H | $C_2H_5$ | $C_2H_5$ | blau |
| 26 | $COCH_3$ | H | CN | $NHCOC_2H_5$ | H | $C_2H_5$ | $C_2H_5$ | blau |
| 27 | $COCH_3$ | H | CN | $NHCOCH_3$ | H | $C_4H_9$ | $C_4H_9$ | blau |
| 28 | $COCH_3$ | H | CN | $NHCOCH_3$ | $OCH_3$ | $C_2H_5$ | $C_2H_5$ | grünst blau |
| 29 | $COCH_3$ | H | CN | $NHCOCH_3$ | $OC_2H_5$ | $C_2H_5$ | $C_2H_5$ | grünst blau |
| 30 | $COCH_3$ | H | CN | $NHCOCH_3$ | $OCH_3$ | $C_2H_4OCOCH_3$ | $C_2H_4OCOCH_3$ | grünst blau |
| 31 | $COCH_3$ | H | CN | $NHCOCH_3$ | $OCH_3$ | $C_2H_4CN$ | $CH_2CH{=}CH_2$ | grünst blau |
| 32 | $COCH_3$ | H | CN | $NHCOCH_3$ | H | $C_2H_4OCH_3$ | $C_2H_5$ | blau |
| 33 | $COCH_3$ | H | CN | $NHCOCH_3$ | H | $C_2H_4OCH_3$ | $C_2H_4OCH_3$ | blau |
| 34 | $COCH_3$ | H | CN | $NHCOCH_3$ | H | $C_4H_8OCOCH_3$ | $C_4H_8OCOCH_3$ | blau |
| 35 | $COCH_3$ | H | CN | $NHCOCH_3$ | H | $CH_2CH{=}CH_2$ | $CH_2CH{=}CH_2$ | blau |
| 36 | $COCH_3$ | H | CN | $NHCOCH_2CN$ | H | $C_2H_5$ | $C_2H_5$ | blau |
| 37 | $COCH_3$ | H | CN | $NHCOCH_2C_6H_5$ | H | $n-C_3H_7$ | $n-C_3H_7$ | blau |
| 38 | $COCH_3$ | H | CN | $CH_3$ | H | $C_2H_5$ | $C_2H_4OH$ | rotst. blau |
| 39 | $COCH_3$ | H | CN | $CH_3$ | H | $C_2H_4OH$ | $C_2H_4OH$ | rotst. blau |
| 40 | $COCH_3$ | H | CN | $NHCOCH_3$ | H | $C_2H_4OCOCH_3$ | $C_2H_4OCOCH_3$ | marine blau |

Tabelle 2: Fortsetzung

| Bsp. | X | Y | Z | $R^5$ | $R^4$ | $R^3$ | $R^2$ | Nuance auf PES |
|---|---|---|---|---|---|---|---|---|
| 41 | $COCH_3$ | H | CN | $CH_3$ | $OCH_3$ | $C_2H_4OCOCH_3$ | $C_2H_4OCOCH_3$ | blau |
| 42 | $COCH_3$ | H | CN | H | H | $C_2H_5$ | $C_6H_5$ | blau-viol. |
| 43 | $COCH_3$ | H | CN | $NHSO_2CH_3$ | H | $C_2H_5$ | $C_2H_5$ | blau |
| 44 | $COCH_3$ | H | CN | $NHCOC_2H_5$ | H | $C_2H_4OH$ | $C_2H_4OH$ | blau |
| 45 | $COCH_3$ | H | CN | H | $OCH_3$ | $C_2H_5$ | $C_2H_5$ | blau |
| 46 | $COCH_3$ | H | CN | $CH_3$ | H | $C_2H_5$ | $C_2H_4CN$ | blau-viol. |
| 47 | $COCH_3$ | H | CN | $NHCOOC_2H_5$ | H | $C_2H_5$ | $C_2H_4OH$ | rotst. blau |
| 48 | $COCH_3$ | H | CN | H | $OCH_3$ | $C_2H_4OCOCH_3$ | $C_2H_4OCOCH_3$ | blau |
| 49 | $COCH_3$ | H | CN | $NHCOCH(CH_3)_2$ | H | $C_2H_5$ | $C_2H_5$ | blau |
| 50 | $COCH_3$ | H | CN | $NHCOCH_3$ | H | $C_2H_4CN$ | $C_2H_5$ | rotst. blau |
| 51 | $COCH_3$ | H | $CO_2C_2H_5$ | $NHCOCH_3$ | H | $C_2H_5$ | $C_2H_5$ | blau |
| 52 | $COCH_3$ | H | $CO_2C_2H_5$ | $NHCOC_2H_5$ | $CH_3$ | $n\text{-}C_3H_7$ | $n\text{-}C_3H_7$ | blau |
| 53 | $COCH_3$ | H | $CO_2C_2H_5$ | $NHCOCH_2OCH_3$ | H | $C_2H_4OCH_3$ | $C_2H_4OCH_3$ | blau |
| 54 | $COCH_3$ | H | $CO_2C_2H_5$ | $NHCOCH_3$ | $OCH_3$ | $C_2H_4OCOCH_3$ | $C_2H_4OCOCH_3$ | grünst blau |
| 55 | $COCH_3$ | H | $CO_2C_2H_5$ | $CH_3$ | H | $C_2H_4CN$ | $C_2H_5$ | blau-viol. |
| 56 | $COCH_3$ | H | $CO_2C_2H_5$ | H | H | $C_2H_4CN$ | $C_2H_4OCOCH_3$ | vio-lett |
| 57 | $COCH_3$ | H | $CO_2CH_3$ | $NHCOCH_3$ | H | $C_2H_5$ | $C_2H_5$ | blau |
| 58 | $CO_2C_2H_5$ | H | CN | $NHCOCH_3$ | H | $n\text{-}C_4H_9$ | $n\text{-}C_4H_9$ | rotst. blau |
| 59 | $CO_2C_2H_5$ | H | CN | $NHCOCH_3$ | H | $C_2H_4OH$ | $C_2H_4OH$ | rotst. blau |
| 60 | $CO_2C_2H_5$ | H | CN | $NHCOCH_2OC_6H_5$ | H | $C_2H_5$ | $C_2H_5$ | rotst. blau |
| 61 | $CO_2C_2H_5$ | H | CN | $CH_3$ | H | $C_2H_5$ | $C_2H_5$ | vio-lett |
| 62 | $CO_2C_2H_5$ | H | CN | H | H | $C_2H_5$ | $C_2H_5$ | vio-lett |
| 63 | $CO_2C_2H_5$ | H | CN | $NHCOCH_3$ | H | $C_2H_5$ | $C_2H_5$ | rotst. blau |
| 64 | $CO_2C_2H_5$ | H | CN | $NHCOCH_3$ | $OCH_3$ | $C_2H_4OCOCH_3$ | $C_2H_4OCOCH_3$ | blau |
| 65 | $CO_2CH_3$ | H | CN | $NHCOCH_3$ | H | $n\text{-}C_3H_7$ | $n\text{-}C_3H_7$ | rotst. blau |

Tabelle 2: Fortsetzung

| Bsp. | X | Y | Z | $R^5$ | $R^4$ | $R^3$ | $R^2$ | Nuance auf PES |
|---|---|---|---|---|---|---|---|---|
| 66 | $CO_2CH_3$ | H | CN | $CH_3$ | H | $C_2H_5$ | $C_2H_4CN$ | vio-lett |
| 67 | $CO_2C_2H_5$ | H | CN | $CH_3$ | $OCH_3$ | $C_2H_4OCOCH_3$ | $C_2H_4OCOCH_3$ | blau |
| 68 | $CO_2C_2H_5$ | H | CN | $CH_3$ | H | $C_2H_5$ | $C_2H_4OH$ | rotst. blau |
| 69 | $CO_2C_2H_5$ | H | $CO_2C_2H_5$ | $NHCOCH_3$ | H | $C_2H_5$ | $C_2H_5$ | rotst. blau |
| 70 | $CO_2C_2H_5$ | H | $CO_2C_2H_5$ | $CH_3$ | H | $C_2H_4OH$ | $C_2H_4OH$ | rotst. blau |
| 71 | $CO_2C_2H_5$ | H | $CO_2C_2H_5$ | $CH_3$ | H | $C_2H_5$ | $C_2H_4CN$ | vio-lett |
| 72 | $CO_2H$ | H | CN | $NHCOCH_3$ | H | $C_4H_9$ | $C_4H_9$ | rotst. blau |
| 73 | $CO_2H$ | H | CN | $NHCOC_2H_5$ | H | $C_2H_4OCOCH_3$ | $C_2H_4OCOCH_3$ | blau-viol. |
| 74 | $CO_2H$ | H | CN | $NHCOCH_2OCH_3$ | H | $C_2H_5$ | $C_2H_5$ | blau |
| 75 | $CO_2H$ | H | CN | H | H | $C_2H_4CN$ | $C_2H_5$ | vio-lett |
| 76 | CN | H | CN | $CH_3$ | H | $C_2H_4CN$ | $C_2H_5$ | vio-lett |
| 77 | CN | H | CN | $NHCOCH_3$ | $OCH_3$ | $C_2H_5$ | $C_2H_5$ | grünst blau |
| 78 | CN | H | CN | $NHCOCH_3$ | H | $C_2H_5$ | $C_2H_5$ | blau |
| 79 | CN | H | CN | $NHCOC_2H_5$ | H | $C_2H_4OH$ | $C_2H_4OH$ | blau |
| 80 | CN | H | CN | $NHCOCH_3$ | H | $C_2H_4CN$ | $C_2H_5$ | rotst. blau |
| 81 | $NO_2$ | H | CN | $NHCOCH_3$ | H | $C_3H_7$ | $C_3H_7$ | blau |
| 82 | $NO_2$ | H | CN | $NHCOCH_3$ | $OC_2H_5$ | $C_2H_4CN$ | $CH_2CH{=}CH_2$ | grünst blau |
| 83 | $NO_2$ | H | CN | $NHCOCH_3$ | H | $CH_2CH{=}CH_2$ | $CH_2CH{=}CH_2$ | blau |
| 84 | $NO_2$ | H | CN | $NHCOCH_2OCH_3$ | H | $C_2H_4OCOCH_3$ | $C_2H_4OCOCH_3$ | blau |
| 85 | $NO_2$ | H | CN | $NHCOCH_2Cl$ | H | $C_4H_9$ | $C_4H_9$ | blau |
| 86 | $NO_2$ | H | CN | $CH_3$ | H | $C_2H_4OH$ | $C_2H_5$ | rotst. blau |
| 87 | H | H | CN | $NHCOCH_3$ | H | $C_4H_9$ | $C_4H_9$ | vio-lett |
| 88 | Cl | H | CN | $CH_3$ | H | $C_2H_5$ | $C_2H_5$ | vio-lett |
| 89 | CN | Cl | CN | $CH_3$ | H | $C_2H_4CN$ | $C_2H_5$ | vio-lett |
| 90 | $COCH_3$ | H | $CO_2C_2H_5$ | $NHCOCH_2Cl$ | H | $C_2H_5$ | $C_2H_5$ | blau |

Die Farbstoffe der Tabelle 3 entsprechen der Formel

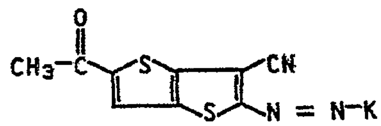

Tabelle 3

| Bsp.-Nr. | K | Nuance auf PES |
| --- | --- | --- |
| 91 | 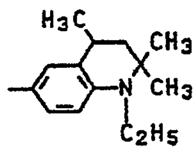 | blau |
| 92 | 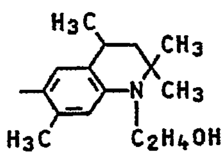 | blau |
| 93 | 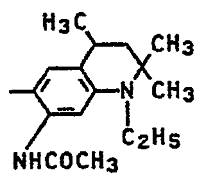 | blau |
| 94 | 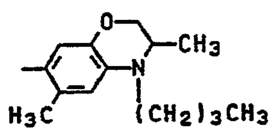 | blau |
| 95 | 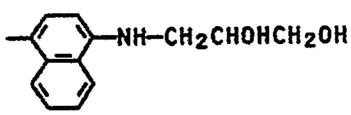 | blau |
| 96 | 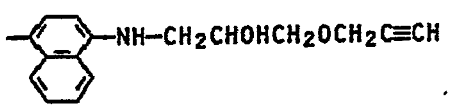 | blau |

Tabelle 3: Fortsetzung

| Bsp.-Nr. | K | Nuance auf PES |
|---|---|---|
| 97 | 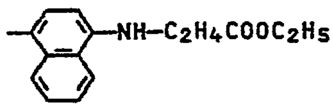 | blau |
| 98 | 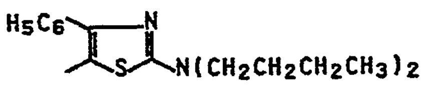 | blau |
| 99 | 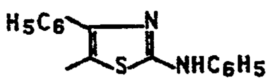 | blau |
| 100 | 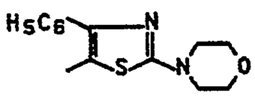 | blau |
| 101 | 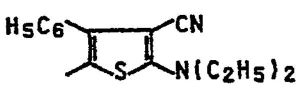 | blau |
| 102 | 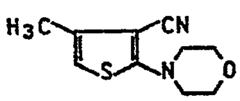 | blau |
| 103 | 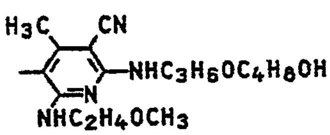 | violett |
| 104 | 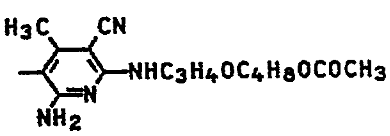 | rotviolett |
| 105 | 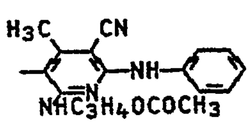 | blauviolett |

Beispiel 106

Zu 2,08 Teilen 4-Chlor-3-cyano-5-formyl-2-(4'-N,N-dibutylamino-2'-methylphenylazo)thiophen in 50 Vol.-Teilen N,N-Dimethylformamid wurden 0,57 Teile p-Dithian-2,5-diol und 0,7 Teile Kaliumcarbonat gegeben. Man rührte unter $N_2$-Atmosphäre 4 Stunden bei 50°C, gab dann die Reaktionsmischung auf 500 Teile Wasser, salzte mit NaCl aus, saugte ab und wusch mit Wasser. Man erhielt 1,8 Teile des Farbstoffs der Formel

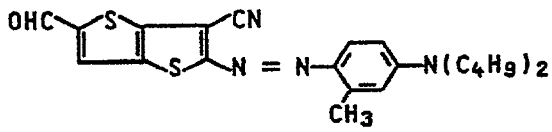

der Polyesterfasern in blauen, echten Nuancen färbt.

Beispiel 107

Zu 2,3 Teilen 4-Chlor-3-cyano-5-formyl-2-(4'-N,N-dibutylamino-2'-acetylaminophenylazo)thiophen in 60 Vol.-Teilen Methanol und 50 Vol.-Teilen N,N-Dimethylformamid gab man 1,35 Teile 30 %ige methanolische Natriummethylatlösung und 0,9 Teile Mercaptoessigsäureethylester. Man rührte 10 Stunden bei 25°C und anschließend 2 Stunden bei 50°C, gab dann auf 500 Teile Wasser, salzte mit NaCl aus, saugte ab und wusch mit Wasser. Man erheilt 2,5 Teile des in Beispiel 58 beschriebenen Farbstoffs.

Beispiel 108

1,75 Teile des in Beispiel 106 beschriebenen Farbstoffs wurden mit 0,9 Teilen Cyanessigsäureethylester in 70 Vol.-Teilen Dioxan, 0,5 Vol.-Teilen Eisessig und 0,5 Vol.-Teilen Piperidin bei 25°C 24 Stunden gerührt. Anschließend wurden 25 Teile Wasser und 25 Teile Eis zugegeben. Es wurde 15 Minuten gerührt, das Produkt abgesaugt und neutral gewaschen. Nach dem Trocknen unter vermindertem Druck bei 40°C erhielt man 1,7 Teile des Farbstoffs der Formel

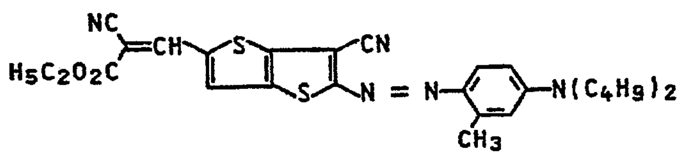

der Polyesterfasern in grünstichig blauen Tönen färbt.

Die in Tabelle 4 aufgeführten Farbstoffe, die der Formel

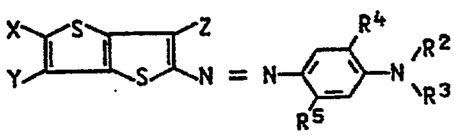

entspechen, können in analoger Weise erhalten werden.

Tabelle 4

| Bsp. | X | Y | Z | $R^5$ | $R^4$ | $R^3$ | $R^2$ | Nuance auf PES |
|---|---|---|---|---|---|---|---|---|
| 109 | CHO | H | CN | $NHCOCH_3$ | H | $C_2H_5$ | $C_2H_5$ | blau |
| 110 | CHO | H | CN | $NHCOC_2H_5$ | H | $C_2H_5$ | $C_2H_5$ | blau |
| 111 | CHO | H | CN | $CH_3$ | H | $C_2H_5$ | $C_2H_5$ | rotst. blau |
| 112 | CHO | H | $CO_2C_2H_5$ | $NHCOC_2H_5$ | H | $n-C_4H_9$ | $n-C_4H_9$ | blau |
| 113 | CHO | H | CN | $CH_3$ | H | $C_2H_4CN$ | $C_2H_5$ | blau |
| 114 | CHO | H | CN | $NHCOCH_3$ | $OCH_3$ | $C_2H_5$ | $C_2H_5$ | grünst blau |
| 115 | X*) | H | CN | $CH_3$ | H | $C_2H_4CN$ | $C_2H_5$ | blau |
| 116 | X**) | H | CN | H | H | $C_2H_5$ | $C_2H_5$ | blau |
| 117 | X*) | H | CN | $CH_3$ | H | $n-C_4H_9$ | $n-C_4H_9$ | grünst blau |

X*) = 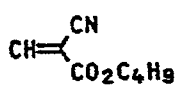

X**) = 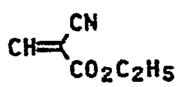

## Patentansprüche

1. Thienothiophenfarbstoffe der Formel I

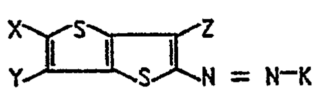 (I),

in der

Z $C_1$–$C_8$-Alkoxycarbonyl, dessen Alkylkette gegebenenfalls durch ein oder mehrere Sauerstoffatome unterbrochen ist, gegebenenfalls durch $C_1$–$C_4$-Alkyl, $C_1$–$C_4$-Alkoxy oder Halogen substituiertes Phenoxycarbonyl, Carbamoyl, $C_1$–$C_8$-Mono- oder Dialkylcarbamoyl, Pyrrolidinocarbonyl, Piperidinocarbonyl, Morpholinocarbonyl, Piperazinocarbonyl, (N-$C_1$–$C_4$-Alkyl)piperazinocarbonyl, Carboxyl, Cyano, $C_1$–$C_{10}$-Alkanoyl, gegebenenfalls durch $C_1$–$C_4$-Alkyl, $C_1$–$C_4$-Alkoxy oder Halogen substituiertes Phenylcarbonyl, $C_1$–$C_4$-Alkylsulfonyl, gegebenenfalls durch $C_1$–$C_4$-Alkyl, $C_1$–$C_4$-Alkoxy oder Halogen substituiertes Phenylsulfonyl oder Nitro,

X Wasserstoff, Fluor, Chlor, Brom, den Rest Z oder eine Gruppe der Formel $-CH=CT^1T^2$, $-CH=N-OH$, $-CH=N-NH-C_6H_5$ oder

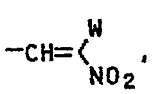,

wobei

$T^1$ und $T^2$ gleich oder verschieden sind und unabhängig voneinander jeweils für Cyano, $C_1$–$C_8$-Alkoxycarbonyl, dessen Alkylkette gegebenenfalls durch ein oder mehrere Sauerstoffatome unterbrochen ist, $C_3$–$C_6$-Alkenyloxycarbonyl, Carbamoyl oder $C_1$–$C_4$-Mono- oder Dialkylaminocarbonyl und

W für Wasserstoff, Methyl oder Ethyl stehen,

Y Wasserstoff, Chlor oder Brom und

K den Rest einer Kupplungskomponente bedeuten.

2. Thienothiophenfarbstoffe gemäß Anspruch 1, bei denen K sich von einer Kupplungskomponente der Formel

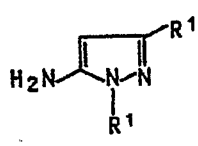, 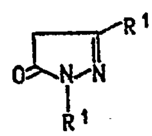, 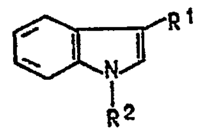, 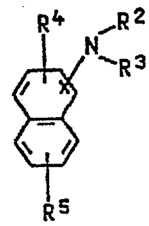, 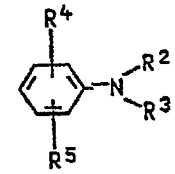,

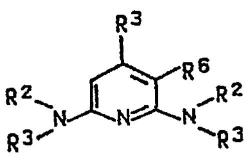, 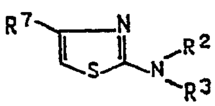, 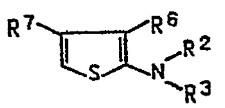 oder 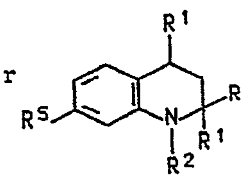

ableitet, wobei

$R^1$ Wasserstoff, $C_1$–$C_4$-Alkyl, Benzyl, 2-Phenylethyl oder gegebenenfalls durch $C_1$–$C_4$-Alkyl, $C_1$–$C_4$-Alkoxy oder Halogen substituiertes Phenyl,

$R^2$ Wasserstoff oder $R^3$,

$R^3$ $C_1$–$C_6$-Alkyl, $C_1$–$C_6$-Alkyl, das durch Chlor, Brom, Hydroxy, $C_1$–$C_8$-Alkoxy, Propargyloxy, Phenoxy, Phenyl, Cyano, Carboxyl, $C_1$–$C_8$-Alkanoyloxy, $C_1$–$C_8$-Alkoxy-$C_1$–$C_4$-alkoxy, Benzoyloxy, o-, m-, p-Methylbenzoyloxy, o-, m-, p-Chlorbenzoyloxy, $C_1$–$C_8$-Alkoxyalkanoyloxy, Phenoxyalkanoyloxy, $C_1$–$C_8$-Alkoxycarbonyloxy, $C_1$–$C_8$-Alkoxyalkoxycarbonyloxy, Benzyloxycarbonyloxy, Phenethyloxycarbonyloxy, Phenoxyethoxycarbonyloxy, $C_1$–$C_8$-Alkylaminocarbonyloxy, Cyclohexylaminocarbonyloxy, Phenylaminocarbonyloxy, $C_1$–$C_8$-Alkoxycarbonyl, $C_1$–$C_8$-Alkoxyalkoxycarbonyl, Phenoxycarbonyl, Benzyloxycarbonyl, Phenoxy-$C_1$–$C_4$-alkoxy oder Phenethyloxycarbonyl ein- oder mehrfach substituiert sein kann, $C_5$–$C_7$-Cycloalkyl, $C_3$–$C_4$-Alkenyl oder gegebenenfalls durch $C_1$–$C_4$-Alkyl, $C_1$–$C_4$-Alkoxy oder Halogen substituiertes Phenyl,

$R^4$ und $R^5$ unabhängig voneinander Wasserstoff, $C_1$–$C_4$-Alkyl, $C_1$–$C_4$-Alkoxy, Phenoxy, Benzyloxy, Halogen, $C_1$–$C_4$-Alkylsulfonylamino, $C_1$–$C_4$-Dialkylaminosulfonylamino, gegebenenfalls durch Chlor, Brom, Cyano, Methoxy, Ethoxy oder Phenoxy substituiertes $C_1$–$C_6$-Alkanoylamino, Benzoylamino oder $C_1$–$C_4$-Alkoxycarbonylamino,

$R^6$ Cyano, Carbamoyl, $C_1$–$C_4$-Mono- oder Dialkylcarbamoyl, Nitro oder $C_1$–$C_8$-Alkoxycarbonyl, dessen Alkylkette gegebenenfalls durch ein oder mehrere Sauerstoffatome unterbrochen ist, und

$R^7$ Halogen, Nitro, gegebenenfalls substituiertes Phenyl, $C_1$–$C_{10}$-Alkyl, oder $C_1$–$C_{10}$-Alkoxy, deren Alkylkette gegebenenfalls jeweils durch ein oder mehrere Sauerstoffatome unterbrochen und/oder durch Phenyl substituiert ist, Phenoxy, $C_1$–$C_4$-Mono- oder Dialkylamino, $C_1$–$C_4$-Alkylthio, Phenylthio, $C_1$–$C_4$-Alkoxycarbonyl, $C_1$–$C_5$-Alkanoylamino, $C_1$–$C_4$-Alkoxycarbonylmethyl oder Cyanomethyl bedeuten.

3. Thienothiophenfarbstoffe gemäß Anspruch 1, dadurch gekennzeichnet, daß
X Formyl, Acetyl, $C_1$–$C_4$-Alkoxycarbonyl, Nitro oder Cyano,
Y Wasserstoff,
Z Cyano, $C_1$–$C_2$-Alkoxycarbonyl, $C_1$–$C_2$-Monoalkylcarbonyl, $C_1$–$C_2$-Alkylsulfonyl oder Phenylsulfonyl und
K den Rest einer Kupplungskomponente der Anilin-, Thiazol- oder Pyridinreihe bedeuten.

4. Verwendung der Verbindungen gemäß Anspruch 1 zum Färben synthetischer Fasern.

## Claims

1. A thionothiophene dye of the formula I

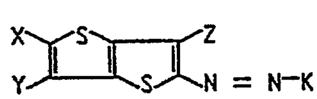 (I),

where

Z is $C_1$–$C_8$-alkoxycarbonyl whose alkyl chain maybe interrupted by one or more oxygen atoms unsubstituted or $C_1$–$C_4$-alkyl-, $C_1$–$C_4$-alkoxy- or halogensubstituted phenoxycarbonyl, carbamoyl, $C_1$–$C_8$-mono-alkylcarbamoyl or -dialkyl-carbamoyl, pyrrolidinocarbonyl, piperidino-carbonyl, morpholinocarbonyl, piperazinocarbonyl, (N–$C_1$–$C_4$-alkyl)piperazinocarbonyl, carboxyl, cyano, $C_1$–$C_{10}$-alkanoyl, unsubstituted or $C_1$–$C_4$-alkyl-, $C_1$–$C_4$-alkoxy- or halogen-substituted phenylcarbonyl, $C_1$–$C_4$-alkylsulfonyl, unsubstituted or $C_1$–$C_4$-alkyl-, $C_1$–$C_4$-alkoxy- or halogen-substituted phenylsulfonyl or nitro, X is hydrogen, fluorine, chlorine, bromine, Z or a group of the formula $-CH{=}CT^1 T^2$, $-CH{=}N{-}OH$, $-CH{=}N{-}NH{-}C_6H_5$ or

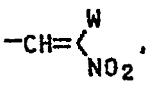,

where $T^1$ and $T^2$ are identical or different and each is, independently of the other, cyano, $C_1$–$C_8$-alkoxycarbonyl whose alkyl chain may be interrupted by one or more oxygen atoms, or is $C_3$–$C_6$-alkenyloxycarbonyl, carbamoyl or $C_1$–$C_4$-mono-alkylaminocarbonyl or dialkylaminocarbonyl and W is hydrogen, methyl or ethyl, Y is hydrogen, chlorine or bromine and K is the radical of a coupling component.

2. A thienothiophene dye as claimed in claim 1 where K is derived from a coupling component of the formula where 1

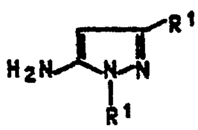, 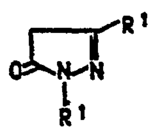, 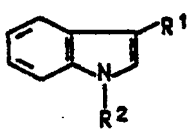, 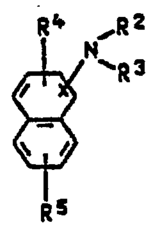, 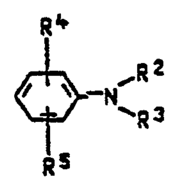,

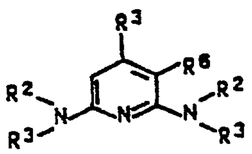, 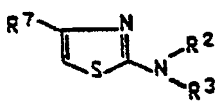, 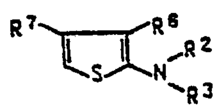 or 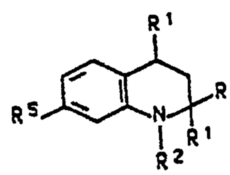

$R^1$ is hydrogen, $C_1$–$C_4$-alkyl, benzyl, 2-phenylethyl or unsubstituted or substituted phenyl $C_1$–$C_4$-alkyl-, $C_1$–$C_4$-alkoxy- or halogen, $R^2$ is hydrogen or $R^3$, $R^3$ is $C_1$–$C_4$-alkyl, $C_1$–$C_6$-alkyl which may be monosubstituted or polysubstituted by chlorine, bromine, hydroxyl, $C_1$–$C_8$-alkoxy, propargyloxy, phenoxy, phenyl, cyano, carboxyl, $C_1$–$C_8$-alkanoyloxy, $C_1$–$C_8$-alkoxy– $C_1$–$C_4$-alkoxy, benzoyloxy, o-, m- or p-methylbenzoyloxy, o-, m- or p-chlorobenzoyloxy, $C_1$–$C_8$-alkoxyalkanoyloxy, phenoxyalkanoyloxy, $C_1$–$C_8$-alkoxycarbonyloxy $C_1$–$C_8$-alkoxyalkoxycarbonyloxy, benzyloxycarbonyloxy, phenethyloxycarbonyloxy, phenoxyethoxycarbonyloxy, $C_1$–$C_8$-alkylaminocarbonyloxy, cyclohexylaminocarbonyloxy, phenylaminocarbonyloxy, $C_1$–$C_8$-alkoxycarbonyl, $C_1$–$C_8$-alkoxyalkoxycarbonyl, phenoxycarbonyl, benzyloxycarbonyl, phenoxy-$C_1$–$C_4$-alkoxy or phenethyloxycarbonyl, or is $C_5$–$C_7$-cycloalkyl, $C_3$–$C_4$-alkenyl or unsubstituted or $C_1$–$C_4$-alkyl-, $C_1$–$C_4$-alkoxy- or halogen-substituted phenyl, $R^4$ and $R^5$ are each independently of the other hydrogen, $C_1$–$C_4$-alkyl, $C_1$–$C_4$-alkoxy, phenoxy, benzyloxy, halogen, $C_1$–$C_4$-alkylsulfonylamino, $C_1$–$C_4$-dialkylaminosulfonylamino, unsubstituted or chlorine-, bromo-, cyano-, methoxy-, ethoxy- or phenoxy-substituted $C_1$–$C_6$-alkanoylamino, benzoylamino or $C_1$–$C_4$-alkcoxycarbonylamino, $R^6$ is cyano, carbamoyl, $C_1$–$C_4$-monoalkylcarbamoyl or -dialkylcarbamoyl, nitro or $C_1$–$C_8$-alkoxycarbonyl whose alkyl chain may be interrupted by one or more oxygen atoms, and $R^7$ is halogen, nitro, substituted or unsubstituted phenyl, $C_1$–$C_{10}$-alkyl or $C_1$–$C_{10}$-alkoxy, where in either case the alkyl chain may be interrupted by one or more oxygen atoms and/or substituted by phenyl, or is phenoxy, $C_1$–$C_4$-monoalkylamino or -dialkylamino, $C_1$–$C_4$-alkylthio, phenylthio, $C_1$–$C_4$-alkoxycarbonyl, $C_1$–$C_5$-alkanoylamino, $C_1$–$C_4$-alkoxycarbonylmethyl or cyanomethyl.

3. A thionothiophene dye as claimed in claim 1, wherein X is formyl, acetyl, $C_1$–$C_4$-alkoxycarbonyl, nitro or cyano, Y is hydrogen, Z is cyano, $C_1$–$C_2$-alkoxycarbonyl, $C_1$–$C_2$-monoalkylcarbamoyl, $C_1$–$C_2$-alkylsulfonyl or phenylsulfonyl, and K is the radical of a coupling component of the aniline, thiazole or pyridine series.

4. Use of a compound as claimed in claim 1 for dyeing synthetic fibers.

## Revendications

1. Colorants de la série des thiénothiophènes de formule I

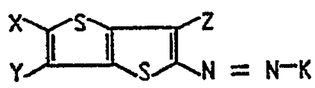 (I),

dans laquelle

Z représente un groupement $C_1$–$C_8$-alcoxycarbonyle dont la chaîne alkyle est éventuellement interrompue par un ou plusieurs atomes d'oxygène, un groupement phénoxycarbonyle éventuellement substitué par un radical alkyle en $C_1$–$C_4$, alcoxy en $C_1$–$C_4$ ou un atome d'halogène, un groupement carbamoyle, mono- ou di-$C_1$–$C_8$-alkylcarbamoyle, pyrrolidinocarbonyle, pipéridinocarbonyle, morpholinocarbonyle, pipérazinocarbonyle, (N-$C_1$–$C_4$-alkyl)-pipérazinocarbonyle, carboxyle, cyano, alcanoyle en $C_1$–$C_{10}$, phénylcarbonyle éventuellement substitué par un radical alkyle en $C_1$–$C_4$, alcoxy en $C_1$–$C_4$ ou un atome d'halogène, un groupement $C_1$–$C_4$-alkylsulfonyle, phénylsulfonyle éventuellement substitué par un radical alkyle en $C_1$–$C_4$, alcoxy en $C_1$–$C_4$ ou un atome d'halogène, ou un groupement nitro,

X représente un atome d'hydrogène, de fluor, de chlore, de brome, le reste Z ou un groupement de formule $-CH{=}CT^1T^2$, $-CH{=}N\text{-}OH$, $-CH{=}N\text{-}NH\text{-}C_6H_5$ ou

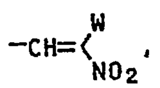 ,

$T^1$ et $T^2$ étant identiques ou différents et étant mis chacun, indépendamment l'un de l'autre, pour un groupement cyano, $C_1$–$C_8$-alcoxycarbonyle dont la chaîne alkyle est éventuellement interrompue par un ou plusieurs atomes d'oxygène, $C_3$–$C_6$-alcényloxycarbonyle, carbamoyle ou mono- ou di-$C_1$–$C_4$-alkylaminocarbonyle et

W pour un atome d'hydrogène, un reste méthyle ou éthyle

Y représente un atome d'hydrogène, de chlore ou de brome et

K représente le reste d'un composant de copulation.

2. Colorants de la série du thiénothiophène selon la revendication 1, dans lesquels K dérive d'un composant de copulation de formule

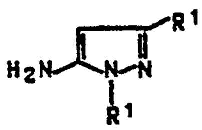 , 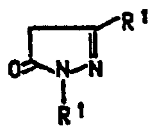 , 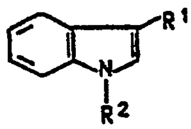 , 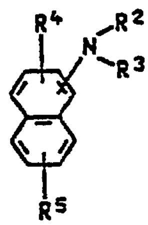 , 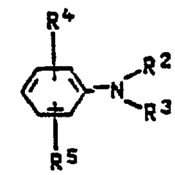 ,

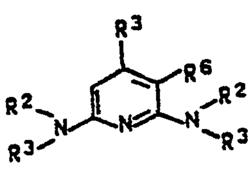 , 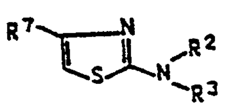 , 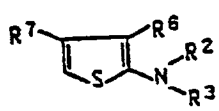 ou 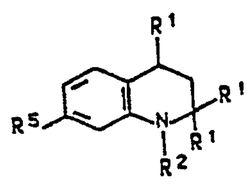

$R^1$ représentant un atome d'hydrogène, un groupement alkyle en $C_1$–$C_4$, benzyle, 2-phényléthyle ou phényle éventuellement substitué par un radical alkyle en $C_1$–$C_4$, alcoxy en $C_1$–$C_4$ ou un atome d'halogène.

$R^2$ représentant un atome d'hydrogène ou $R^3$,

$R^3$ représentant un reste alkyle en $C_1$–$C_6$, alkyle en $C_1$–$C_6$ qui peut être substitué une ou plusieurs fois par un atome de chlore, de brome, un groupement hydroxy, alcoxy en $C_1$–$C_8$, propargyloxy, phénoxy, phényle, cyano, carboxyle, $C_1$–$C_8$, proparglycoxy, phénoxy, phényle, cyano, carboxyle, $C_1$–$C_8$-alcanoyloxy, $C_1$–$C_8$-alcoxy-$C_1$–$C_4$-alcoxy, benzoyloxy, o-, m-, p-méthylbenzoyloxy, o-, m-, p-chlorobenzoyloxy, $C_1$–$C_8$-alcoxyalcanoyloxy, phénoxyalcanoyloxy, $C_1$–$C_8$-alcoxycarbonyloxy, $C_1$–$C_8$-alcoxyalcoxycarbonyloxy, benzyloxycarbonyloxy, phénéthyloxycarbonyloxy, phénoxyéthoxycarbonyloxy, $C_1$–$C_8$-alkylaminocarbonyloxy, cyclohexylaminocarbonyloxy, phénylaminocarbonyloxy, $C_1$–$C_8$-alcoxycarbonyle, $C_1$–$C_8$-alcoxyalcoxycarbonyle, phénoxycarbonyle, benzyloxycarbonyle, phénoxy-$C_1$–$C_4$-alcoxy ou phén-

éthyloxycarbonyle, un reste cycloalkyle en $C_5$–$C_7$, alcényle en $C_3$–$C_4$ ou phényle éventuellement substitué par un radical alkyle en $C_1$–$C_4$, alcoxy en $C_1$–$C_4$ ou un atome d'halogène.

$R^4$ et $R^5$ représentant chacun, indépendamment l'un de l'autre, un atome d'hydrogène, un reste alkyle en $C_1$–$C_4$, alcoxy en $C_1$–$C_4$, phénoxy, benzyloxy, un atome d'halogène, un groupement $C_1$–$C_4$-alkylsulfonylamino, $C_1$–$C_4$-dialkylaminosulfonylamino, $C_1$–$C_6$-alcanoylamino éventuellement substitué par un atome de chlore, de brome ou par un reste cyano, méthoxy, éthoxy ou phénoxy, benzoylamino ou $C_1$–$C_4$-alcoxycarbonylamino,

$R^6$ représentant un groupement cyano, carbamoyl, mono- ou di-$C_1$–$C_4$-alkylcarbamoyle, nitro ou $C_1$–$C_8$-alcoxycarbonyle dont la chaîne alkyle est éventuellement interrompue par un ou plusieurs atomes d'oxygène, et

$R^7$ représentant un atome d'halogène, un groupement nitro, phényle éventuellement substitué, alkyle en $C_1$–$C_{10}$ ou alcoxy en $C_1$–$C_{10}$ dont la chaîne alkyle est éventuellement interrompue chaque fois par un ou plusieurs atomes d'oxygène et/ou est substituée par un reste phényle, un groupement phénoxy, mono- ou di-$C_1$–$C_4$-alkylamino, $C_1$–$C_4$-alkylthio, phénylthio, $C_1$–$C_4$-alcoxycarbonyle, $C_1$–$C_5$-alcanoylamino, $C_1$–$C_4$-alcoxycarbonylméthyle ou cyanométhyle.

3. Colorants de la série du thiénothiophène selon la revendication 1, caractérisés en ce que
X représente un groupement formyle, acétyle, $C_1$–$C_4$-alcoxycarbonyle, nitro ou cyano,
Y représente un atome d'hydrogène,
Z représente un groupement cyano, $C_1$–$C_2$-alcoxycarbonyle, $C_1$–$C_2$-monoalkylcarbonyle, $C_1$–$C_2$-alkylsulfonyle ou phénylsulfonyle et
K représente le reste d'un composant de copulation de la série de l'aniline, du thiazole ou de la pyridine.

4. Utilisation des composés selon la revendication 1 pour la teinture de fibres synthétiques.